# EUROPEAN PATENT APPLICATION

(11) **EP 2 071 819 A1**
(43) Date of publication of application: **17.06.2009**
(21) Application number: 08169356.6
(22) Date of filing: 18.11.2008
(51) Int. Cl.: H04M 3/436, H04M 3/533

(54) **A method of providing context aware announcements**

(30) Priority: 14.12.2007 US 2167
(71) Applicant: Mitel Networks Corporation, Ottawa, ON K2K 2W7 (CA)
(72) Inventor: Trinh, Trung (Tim), Ontario K2G 0Z5 (CA); Gray, Thomas A, Quebec J0X1V0 (CA)
(74) Representative: Pisani, Diana Jean

(57) **Abstract**

A method and system of providing context aware announcements is provided. Context call handling rules are applied to determine a current context of an incoming call. At least one context aware announcement is provided for providing information associated the current context and call information.
More specifically announcements are made to the caller that can be customised according to the identity of the caller and take into account the activities of the called party. E.g. Hallo Joe, I am in a meeting until 15:00, please call me at 15:30 on my mobile phone.
The caller can also receive multilevel announcement and given options as to handle the call e.g. be forwarded to voicemail or wait on hold to be connected.

## Description

### FIELD

This invention relates generally to communication systems, and more particularly to a method of providing context aware announcements.

### DESCRIPTION OF THE PRIOR ART

In the normal course of a day, people receive numerous calls concerning multiple topics. These can cause disruption which may deleteriously affect their concentration that they need to effectively carry on with their work. To deal with these interruptions, people must find ways of prioritising their calls so that they can efficiently manage their attention. Calling Line ID (CLID) and CRM (customer relations management) tools have been developed to aid people in managing these call attempts efficiently and minimising the disruptions that can occur. Furthermore, senior managers may be provided with a human assistant to vet incoming calls for appropriateness to the manager's current context. The assistant can prioritise calls, take a messages, and interrupt the manager to take important calls. The assistant can make announcements to both the caller and the manager concerning the proposed disposition of calls based on priority. The assistant can offer options to both the manager and the caller for call handling. The announcements made can be appropriate to the role relationship between the caller and the manager.

For others, a sense of social awareness provides the same function as the senior manager's assistant. Someone who wishes to interact with a specific person within a conventional office environment is able to sense their context and gauge the appropriateness of their proposed interaction within it. As an example, seeing someone in close collaboration with a colleague will provide a sense that a casual conversation is inappropriate. However, if the proposed subject matter is about the work that that someone is currently doing then the interaction can be most appropriate.

Hence, collaboration within an enterprise is mediated by a sense of the appropriateness of any specific proposed interaction within the current context. This awareness can be mediated by proximity as is shown by the example of the interaction of colleagues. However with IP telephony and other network collaboration systems, this sense of awareness is lost. The example of the senior manager's assistant gives an example of one way in which this can be recovered. Proposed interactions and events within these interactions can be announced to both parties along with proposed actions.

While certain voice mail systems allow for greetings to be selected based on the supplied calling line identity (CLID). This is one step in the direction of providing contextual aware announcements; these are specific only to the one condition of message taking. For example, the user may be busy with other people in his/her office or he may be away from his desk for a few minutes. The voice mail system is only aware that a call has been forwarded to it and cannot tailor its messages to the current context of the users.

Similarly US patent 5,754,627 ("Method and Apparatus for Managing Calls Using a Soft Call Park") discloses a system whereby a called party on being notified of a call from a calling party may trigger an announcement played to the calling party giving him/her the option of either leaving a voice mail message or waiting in a queue to speak to the called party. This is a "Wait a minute" feature. The feature provides only a generic message. It is not customised to the calling party or the current user context. The message cannot be made appropriate to the relationship between the called and calling party and the reason why the call cannot be immediately accepted cannot be given specifically.

### SUMMARY

A first broad aspect of an embodiment seeks to provide a method of providing context aware announcements, the method comprising: applying context call handling rules to determine a current context of an incoming call; and providing at least one context aware announcement for providing information associated the current context and call information.

In some embodiments of the first broad aspect, the incoming call is from a caller to a user and the providing at least one context aware announcement comprises providing at least one context aware announcement to at least one of the caller, the user and a third party.

In other embodiments of the first broad aspect, the applying context call handling rules to determine a current context is based on at least one of a relationship between a caller and a user, a schedule of the user, a location of the user, an activity of the user, a call type and a preference of the user.

In further embodiments of the first broad aspect, the at least one context aware announcement comprises at least one selectable option for handling the incoming call. In some of these embodiments, the at least one selectable option comprises requesting information associated with the context of the incoming call. In other of these embodiments, the method further comprises receiving a selection of the at least one selectable option, and providing at least one further selectable option for handling the incoming call. In yet further of these embodiments, the at least one selectable option comprises information associated with the context of the incoming call and forwarding the incoming call to at least one of voicemail, a database and a third party.

In yet further embodiments of the first broad aspect, the method further comprises retrieving the context call handling rules.

In some embodiments of the first broad aspect, the context call handling rules are further based on crisp indicators of availability from generated indicators of fuzzy availability in conjunction with specific decisions on call handling.

In other embodiments of the first broad aspect, the at least one context aware announcement comprises at least one variable value, the at least one variable valuable determined by processing at least one of the context and the call information.

A second broad aspect of an embodiment seeks to provide a system for providing context aware announcements. The system comprises a call management entity for managing incoming calls and the context aware announcements. The system further comprises a shared memory space accessible to the call management entity for storing context data. The system further comprises at least one agent coupled to the shared memory space, the at least one agent for:
applying context call handling rules to the context data to determine a current context of an incoming call; and providing at least one context aware announcement to the call management entity for providing information associated the current context and call information.

In some embodiments of the second broad aspect, the system further comprises a user interface for enabling interaction of a user with the shared memory space. In some of these embodiments, the user interface is enabled to allow a user to set current context within the shared memory space. In other of these embodiments, the user interface is enabled to allow a user to respond to context aware announcements originating from the call management entity.

A third broad aspect of an embodiment seeks to provide a computer readable medium having computer readable code embodied therein for controlling a computer to: apply context call handling rules to determine a current context of an incoming call; and provide at least one context aware announcement for providing information associated the current context and call information.

### BRIEF DESCRIPTIONS OF THE DRAWINGS

Embodiments are described with reference to the following figures, in which:
FIG. 1 is a functional diagram of the Internet telephony system according to a non-limiting embodiment, which embodies a distributed call processing model;
FIG. 2 is a block diagram of a hardware implementation of the Internet telephony system according to a non-limiting embodiment;
FIG. 3 shows the system architecture and module interactions for the Internet telephony system of FIGS. 1 and 2, according to a non-limiting embodiment;
FIG. 4 is a class diagram for the server modules of FIG. 3, according to a non-limiting embodiment;
FIG. 5 is a class diagram for the client modules of FIG. 3, according to a non-limiting embodiment;
FIG. 6 is a use case diagram of the system according to a non-limiting embodiment, with corresponding actors;
FIG. 7 is a state chart diagram for user login and registration to the system according to a non-limiting embodiment;
FIG. 8 is a server welcoming window displayed to the user during operation of the system according to a non-limiting embodiment;
FIG. 9 is the server main window displayed to the user during operation of the system according to a non-limiting embodiment;
FIG. 10 is an administrator login window displayed to an administrator during operation of the system according to a non-limiting embodiment;
FIG. 11 is a context setting window displayed to the administrator during operation of the system according to a non-limiting embodiment;
FIG. 12 is a computer name and extension number setting window displayed to the administrator during operation of the system according to a non-limiting embodiment;
FIG. 13 is a relationship assigning agent window displayed to the administrator during operation of the system according to a non-limiting embodiment;
FIG. 14 is a user rule assigning agent window displayed to the administrator during operation of the system according to a non-limiting embodiment;
FIG. 15 is a user-rule conflict resolving agent window displayed to the administrator during operation of the system according to a non-limiting embodiment;
FIG. 16 is a user login window displayed to the user during operation of the system according to a non-limiting embodiment;
FIG. 17 is a user registration window displayed to the user during operation of the system according to a non-limiting embodiment;
FIG. 18 is a client main window displayed to the user during operation of the system according to a non-limiting embodiment;
FIG. 19 is a relationship setting window displayed to the user during operation of the system according to a non-limiting embodiment;
FIG. 20 is a buddy-list setting window displayed to the user during operation of the system according to a non-limiting embodiment;
FIG. 21 is a schedule setting window displayed to the user during operation of the system according to a non-limiting embodiment;
FIG. 22 is a user rule setting window displayed to the user during operation of the system according to a non-limiting embodiment;
FIG. 23 is a window displayed to the user for selecting context when setting a user rule according to a non-limiting embodiment;
FIG. 24 is a window displayed to the user for selecting caller condition when setting a user rule according to a non-limiting embodiment;
FIG. 25 is a window displayed to the user for selecting an action when setting a user rule according to a non-limiting embodiment;
FIG. 26 is a confirmation window displayed to the user when setting a user rule according to a non-limiting embodiment;
FIG. 27 is a flowchart showing the steps for creating a user rule, according to FIGS. 23 to 26, according to a non-limiting embodiment;
FIG. 28 is a context simulation window displayed to the user during operation of the system according to a non-limiting embodiment;
FIG. 29 is a call delivery agent window displayed to the user during operation of the system according to a non-limiting embodiment;
FIG. 30 is an incoming call notification window displayed to the user during operation of the system according to a non-limiting embodiment;
FIG. 31 is a system management agent window displayed to the user during operation of the system according to a non-limiting embodiment;
FIG. 32 is an agent based view of the system of Figures 2 and 3, according to a non-limiting embodiment;
FIG. 33 is a message specifying window displayed to the user during operation of the system according to a non-limiting embodiment; and
FIG. 34 is a message specifying window displayed to the user during operation of the system according to a non-limiting embodiment.

### DETAILED DESCRIPTION

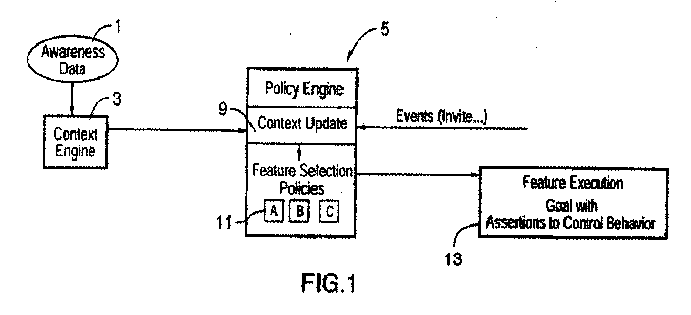

Turning to FIG. 1, a functional diagram is provided of the system according to a non-limiting embodiment. In operation, awareness data 1 is received from one or more ubiquitous sensors (not shown), relating to the user's location and activities, and applied to a context engine 3. A variety of technologies are available for tracking the locations of people. Examples of such ubiquitous sensors include the Active Badge System [Roy Want, Andy Hopper, Veronica Falcao, Jonathan Gibbons, "The Active Badge Location System", ACM Transactions on Information Systems 10(1) 91-102, 1992], PARCTabs [Norman Adams, Bill N. Schilit, Rich Gold, Michael Tso and Roy Want, "The PARCTAB Mobile Computing System", Proceedings of the Fourth Workshop on Workstation Operating Systems (WWOS-IV), pages 34-39, Napa, Calif., October 1993], mobile phones [Peter Duffet-Smith, "High precision CURSOR and digital CURSOR: the real alternatives to GPS", Proceedings of EURONA V 96 Conference on Vehicle Navigation and Control, Royal Institute of Navigation, 1996] and ultrasonic devices [Andy Ward, Alan Jones and Andy Hopper, "A new location technique for the active office", IEEE Personal Communications 4(5), 43-7, 1997].

Applicant's co-pending application, "Availability and Location Predictor Using Call Processing Indications", U.S. Ser. No. 10/631,819, filed on August 1, 2003 and incorporated herein by reference, describes a method of evidence gathering that surmises (i.e. makes guesses) about user availability from his/her interactions with a PBX system. The interactions are gathered as awareness information and processed by an algorithm into availability information. By using awareness information as evidence, the algorithm makes predictions about the users' availability or makes decisions in call processing. This information is fed back into a shared database (e.g. a tuple space) as assertions that indicate high level assessments about the user's state. These assessments are then used by the call processing components described below to make decisions on call handling.

Additional aspects relating to the application of awareness data 1 to context-based communication systems is described in applicant's co-pending applications: "System and method for facilitating communication using presence and communication services", U.S. Ser. No. 10/631,789, filed on July 31, 2003, incorporated herein by reference; and "Generation of Availability Indicators from Call Control Policies for Presence Enabled Telephony System", U.S. Ser. No. 10/631,747, filed on August 1, 2003 and incorporated herein by reference.

Awareness data (i.e. raw information about the user) that has been processed by context engine 3 into availability information is then applied to a policy engine 5 in the form of assertions of interest to policies within the system, as described in detail below. The policy engine 5 includes a context update block 9 and feature selection policies 11.

In context update block 9, an incoming event (e.g. Invite, etc.) is related to the current context of the user. Every event has associated with it some indicators that are pertinent to the user's call that provide evidence of the relevance, urgency and importance of the call to the user. Such indicators include caller identity, role relationship between caller and called party, group or project membership, location of user, current state of called user, subject of the call, and so on. Some of these evidential indicators are explicit in the call and some can be derived by inference from other indicators (e.g. awareness data, as discussed above). The context update block 9 uses opportunistic reasoning to develop the required evidence. This evidence is then supplied to the feature selection policies 11 for selecting a feature, discussed in greater detail below. As discussed in our counterpart application entitled "Generation of Availability Indicators from Call Control Policies for Presence Enabled Telephony System" referenced above, the evidential indicators may be in the form of fuzzy variables. The fuzziness of these variables is used to indicate the degree of credence that the system has in them.

In the context update evidence gathering process performed by block 9, the system occasionally asks the user which feature he/she wishes to have executed. Sending the user options to his/her wireless browser asking for his/her selection is one among several mutually appropriate options for accomplishing this. Moreover, options may be sent to the calling party asking him/her to select one of several acceptable options.

As discussed above, the user sets some of the policies used in the opportunistic reasoning of context update block 9, although many of the policies are implicit in the way people generally interact. Thus, several default policies are set by system administrators using sociological principles. Examples of such default policies include calls from superiors being more important than calls from subordinates, someone alone in an office being more available than someone with several visitors, calls with a subject related to a user's current activities are less intrusive than calls with unrelated subjects, etc.

Once the user context has been updated with call specific information in block 9, the feature to be performed is selected in block 11. Feature selection policies block 11 utilizes the evidence generated previously in block 9 to direct call handling in accordance with policies set by the user governing the personalized call handling he/she expects. These policies indicate how calls should be handled for differing role relationships, time of day, user state, user location etc. According to applicant's co-pending application, "Personalizable and customizable feature execution for IP telephony using operational semantics and deontic task trees", U.S. Ser. No. 10/631,853, filed on August 1, 2003 and incorporated herein by reference, block 11 uses forward chaining with fuzzy reasoning to generate priorities among all proposed features and relates that to the intrusiveness of the proposed actions. This results in the selection of a single feature as being the most appropriate for call handling given the declared personalized preferences of the user. The feature is then executed, as shown at block 13.

The execution of features at block 13 can be modulated as described in Applicant's counterpart granted patent entitled "Processing by use of synchronized tuple spaces and assertions", U.S. Pat. No. 7,096,259, filed on August 21, 2000 and incorporated herein by reference, to allow external features acting as enterprise constraints to control the execution of the selected feature.

Thus, with the new addressing capabilities of Internet-based telephony, features can take on new semantics. Instead of remaining at the device level as in conventional telephony, features can operate at a personal level. Calls are not directed to physical endpoints but rather to aspects of the user's identity within his/her business context (or alternatively social context). A user may have multiple aspects to his/her identity, each of which has different capabilities in the business environment. For example, a user may have multiple aspects to his identity in the form of:
● Voice mail box for messages that do not need current attention;
● Secretary or equivalent function that can use mechanisms outside of call processing to make routine decisions about call disposition and other matters to shield the user from interruption;
● Identities that represent the user in distinct current projects, etc.

These multiple identities may be carried directly in URLs that convey meaning in respect to aspects of the user's identity using the standard 'dot' convention. Thus, a user named John Doe may have multiple aspects of his business identity specified as:
● assistant.john_.doe@example.com;
● personal.john_doe@example.com;
● voice-mail.john_doe@example.com; and/or
● project.sub.--3499.john_doe@example.com.

This change in convention effectively creates an entirely new model of how telephony features operate in converged voice and data systems. As indicated above, features operate with an understanding of the current user context and communications are directed to the most appropriate aspect of the user identity. Thus, for example, calling parties can indicate which aspects of the identity they wish to contact and which aspects they do not wish to deal with.

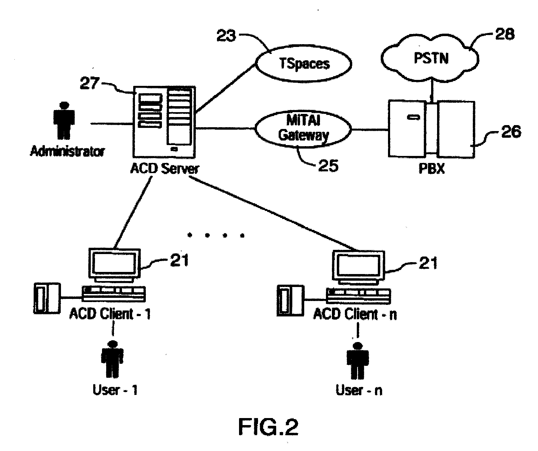

An exemplary hardware implementation of the system, according to a non-limiting embodiment, is shown in FIG. 2. The system is based on client-server architecture. An Active Call Delivery (ACD) client 21 communicates with an ACD server 27 which, in turn, communicates with a TSpaces server 23 and a MiTAI Gateway server 25. MiTAI Gateway server 25 provides access via a PBS 26 to the PSTN 28. ACD server 27 is a single server or multiple servers having access to the TSpaces server 23. The ACD server 27 consists of user interfaces and a collection of "system agents" discussed in greater detail below. The user interfaces provide an introduction window, a login window for a system administrator, a context window for managing a hierarchy of contexts and a call simulation window for simulating a phone call. Each system agent contributes to call processing and has its own responsibilities: a Relationship Assigning (RA) agent is responsible for acquiring the relationship between a caller and a receiver, and assigning it to a relevant data field for call processing. A User Rule Assigning (URA) agent is responsible for extracting all of the matching user rules according to the conditions of each rule and the current context, and assigning them to a relevant data field for call processing. A User-rule Conflict Resolving (UCR) agent is responsible for resolving any conflict that might be present in the assigned rules. As indicated above, these agents do not have to be installed on a particular machine, but can be distributed over a network of machines, which have access to the TSpaces server 23. Further details of the various agents are described below.

The ACD client 21 consists of user interfaces and user agents. The user interfaces provide an introduction window, a login window for a registered system user, and a registration window for a new user. Knowledge management is an important part of the user interface on the client system. A user can create or manage personal information such as a buddy list, relationship information, a schedule and a user preference rule. The client server utilizes two types of agents: The Call Delivery (CD) agent and the System Management (SM) agent. The CD agent acknowledges events, which are generated by the Call Monitor, in the Tspaces server 23. The Call Monitor is a direct interface with the MiTAI Gateway 25, and creates an event that is fed into the TSpaces server 23 for starting call processing by the CD agent. Next, the SM agent acknowledges the event from the CD agent, and distributes the call processing to agents on the network. Although each agent has distinct services, both the server and the client have certain common modules as per customary object-oriented design. These common object modules and the other modules are explained below.

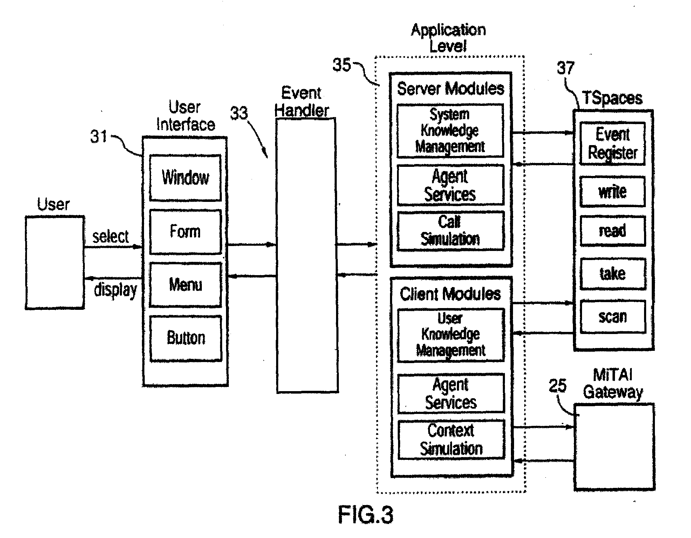

FIG. 3 shows the system architecture and module interactions for the Internet telephony system of FIGS. 1 and 2. The user interface 31 consists of windows, forms, menus and buttons for providing user login, registration, user preference rule setting, context simulation, and a display of messages for assisting the user.

The Event Handler subsystem 33 is a monitoring daemon that resides between the user interface 31 and the Application Level subsystem 35. It waits for physical events to arrive from the user interface 31, such as mouse clicks, and directs them to the appropriate application module. The development tool, Java, provides embedded event handlers, such as ActionListener, for this purpose.

The Application Level 35 is the core of the system. It consists of multiple agents that provide services for a client as well as for a server. All of the system transactions, functionalities, and knowledge management are performed within this subsystem.

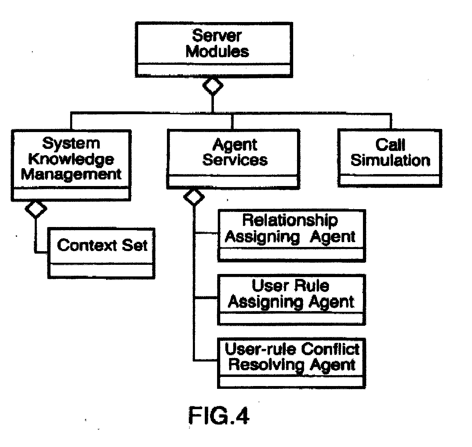

### As shown in the class diagram of FIG. 4, the server modules are divided into three major parts:

System Knowledge Management, Agent Services and Call Simulation. The System Knowledge Management module includes a Context Set sub-module to allow an authorized administrator to create or modify a context hierarchy such as location and activity. The Agent Services module consists of three distinct agent modules: The Relationship Assigning (RA) agent, the User Rule Assigning (URA) agent, and the User-rule Conflict Resolving (UCR) agent. In order to give flexible implementation of the agents, status of the agents is managed in order to know their availability. Network connectivity may affect their availability. Therefore, both an agent and the connection between the agent and the system's TSpaces 37 (FIG. 3) must be functional in order to use the agent. The system acquires agent's status by examining a corresponding status tuple in the TSpaces 37. The status tuple consists of "name", "priority" and "availability" fields. Each agent is responsible for updating its status tuple in the TSpaces 37. The procedures for updating a status tuple consist of taking the status tuple and rewriting it with new status information once per second. A tuple can be set to expire after a predetermined time. Upon expiration, the TSpaces server 23 removes the tuple from the TSpaces 37. The expiration time for a status tuple is three seconds, so if an agent fails to update the tuple three times consecutively for any reason, there will be no status tuple for the corresponding agent in the TSpaces 37. The system assumes that an agent is abnormal if there is no status tuple for the agent, or if the "availability" field in the status tuple is set as "abnormal". The time gap between the one-second it takes to update the status tuple and the three seconds allowed before the status tuple expires may prevent unnecessary status toggling by temporal network disturbance.

Each agent is also responsible for registering an event into the TSpaces 37 to communicate with client machines. Whenever an awaited tuple is written into the TSpaces 37, the TSpaces server 23 notifies this to an agent that registered the event. Generating an event and getting notification of the event from the TSpaces 37 forms a two-way communication-acknowledgement between agents.

The Relationship Assigning (RA) agent is responsible for responding to a relationship-assigning request from a client's SM agent. The request from a SM agent contains caller and receiver information. The RA agent assigns the relationship between the user and the caller according to the user's buddy-list.

The User Rule Assigning (URA) agent is responsible for responding to a user-rule-assigning request from a client's SM agent. Upon request, the URA agent retrieves both the relationship information and the user's current contexts. The relationship information is a relationship between the caller and the receiver, set by the RA agent. The user's current contexts are the user's location, the current time with the user's schedule, and the user's activity.
Who is calling?
Where is the user?
What the user is doing?
When is it?

The User-rule Conflict Resolving (UCR) agent is responsible for responding to a client's SM agent for the user-rule conflict-resolving request. The request contains user rule information that is assigned by the URA agent. The UCR agent selects one rule that is the most specific among the assigned rules. The more conditions a rule has, the more specific a rule is considered to be. The Call Simulation service is provided for testing without connecting to a MiTAI Gateway 25. A window with a form serves this functionality.

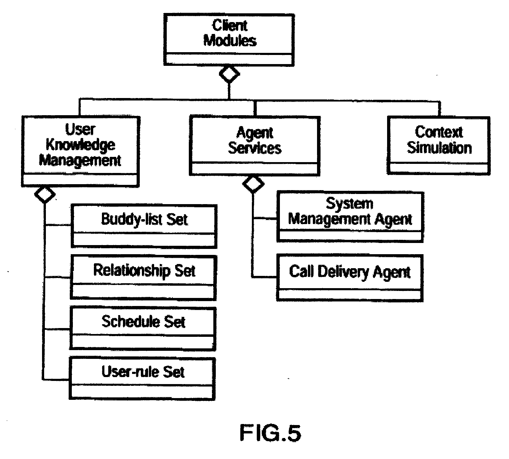

As shown in the client module class diagram of FIG. 5, the client modules are divided into three subsystems: User Knowledge Management, Agent Services, and Context Simulation. A user can manipulate personal knowledge through the User Knowledge Management module.

The Call Delivery (CD) agent is responsible for communication with the phone switch or PBX 26 through MiTAI Gateway 25. In particular, the CD agent registers events to MiTAI Gateway 25 and waits for the notification of an incoming call for a user. When the notification arrives, the CD agent sends a request to the SM agent for further processing and waits for response. This response from the SM agent contains an action to be taken as a result of an entire call processing. Then the CD agent is responsible for requesting the selected action to the MiTAI Gateway 25.

The System Management (SM) agent is responsible for managing other agents' status and sequencing call processing according to the system agents' priority. When the CD agent requests call processing, the SM agent scans the agents' status tuples in the TSpaces 37 and makes a sequence table according to their priority. It sends a processing request to the highest-priority-agent, waits for a response and then sends it to the next-highest-priority-agent. When the SM agent receives a response from the lowest-priority-agent, it sends an information tuple back to the CD agent.

The Context Simulation module serves as a context agent that dynamically detects, interprets and updates the user's current contexts. A Context Simulation window includes all of the possible contexts, which are set by a system administrator, and a user selects from them.

TSpaces 37 (i.e. tuple spaces), are implemented in one or more servers 23 as a network communication buffer with database capabilities. A more complete description of TSpaces 37 may be found in http://www.almaden.ibm.com/cs/TSpaces/, and US Patent No. 7,096,259. TSpaces 37 enable communication between applications and devices in a network of heterogeneous computers and operating systems. TSpaces 37 provides group communication services, database services, URL-based file transfer services, and event notification services. The TSpaces 37 are implemented in the Java programming language and thus automatically possess network ubiquity through platform independence, as well as a standard type of representation for all data types. The TSpaces system is appropriate for any application that has distribution or data storage requirements. It can perform many of the duties of a relational database system without imposing an overly restrictive (and primitive) type system, a rigid schema, a clumsy user interface or a severe runtime memory requirement. In the present invention, the TSpaces Server 23 is the medium between the system and user knowledge stores. However, it will be understood that Tspaces 37 may be replaced by a relational database or other shared database providing equivalent functionality for managing knowledge transactions, including read, write, update, take and scan, as well as event handling, such as registration and notification of events.

The MiTAI Gateway 25 facilitates communication to the MITEL telephony servers (i.e. PBX 26) for processes that are not based on the "C" development language. However, the MiTAI Gateway 135 is not particularly limiting, and any suitable gateway that performs a similar function is within the scope of present embodiments. The MiTAI Gateway 25 is a Windows based process that can be executed on any Windows platform. It can manage a single socket connection from any other process on a network and it supports a limited session protocol.

The MiTAI Gateway Server 25 is the intermediate system between the PBX 26 and the ACD's Application Level subsystem 35. The Application Level subsystem 35 registers an event to the MiTAI Gateway server 25 for the purpose of monitoring incoming calls.

In terms of system topology, the User Interface 31 is built on a Windows Platform, and it interacts with the Application Level 35 through an Event Handler 33. The Application Level 35 subsystems use TSpaces server 23 as the medium for communication and for accessing the System Knowledge Management of the server and clients.

All of the knowledge, which includes user information, user rules, the user's current context information, and call information, is stored in the TSpaces 37. The unit of storage is a tuple, as set forth in the references cited above, and as discussed in the Appendix to this specification.

User Information consists of basic user information, relationship information, a buddy list, user preference rules and the dynamically varying user's current context information. User Information is stored in a tuple named "UserProfile" and the structure is as follows:

### ["UserProfile", id, user-info, relationship, buddy-list, user-rule, context]

where "UserProfile" is the name of the tuple, id is user identification for uniquely identifying a user in the system. The user-info field contains basic user information about the user such as: password, name, phone numbers, and the user's time schedule. The phone numbers are extension phone numbers within the PBX 26, such as my office and assistant's phone numbers (e.g. 4001). This field also contains the schedules of the user. Schedules for lunches and meetings may be input by the user directly or ascertained from another application (e.g. Microsoft Outlook, etc.). The relationship field contains relationship information which is defined by the user in a relationship hierarchy using the user interface. The user can add any person as his "buddy" in a buddy list. The buddy list contains information about such persons including as name and phone number, as well as their relationship to the user. The user-rule field contains a user preference rule. The user creates his/her personal preferences for handling incoming calls via the user interface 31. The conditions in a rule can make use of the contexts, the buddy list and a relationship selected from the relationship information hierarchy. In that regard, the context field contains context information. The context determining parameters, which are used in the system, are location, the user's current activity and the present time. The location and activity contexts have a hierarchy, so that they may have sub-contexts. The current context information of a user can be either a real context or a pretended context set by the user. The real context information is updated by the context agent(s) whereas the pretended context, on the other hand, is set and controlled by the user. The pretended context is designed to override the real contexts if so desired by the user. The hierarchy of the location parameters is defined by a system administrator. Thus, if a location's properties are coupled with the phone number, the system can deliver the user's call to the phone nearest to the user's current location.

There are two kinds of activities that can be defined. Some activities can be automatically detected by the system, whereas others can only be assumed or set by a user. For example, the system is able to know whether the user is 'on the phone', but it is difficult to judge if the user is 'busy at work' or 'having a break' . Therefore, detectable activities are updated by the system automatically, and others are set by the user. A receiver's time context is set according to his time schedule. For example, if the user's lunchtime is scheduled from 12 p.m. to 1 p.m., the system can assume that the user is having lunch during that time period.

Call information is contained in a tuple that an agent shares to communicate with other agents for processing an incoming call. Therefore, it contains all of the necessary data fields for caller information and user preference rules. Agents take the "Call" tuple from the TSpaces 37 and update it according to their responsibility. For example, the RA agent assigns relationships between the caller and the receiver, the URA agent assigns all the appropriate user rules, and the UCR agent resolves user rule conflict by selecting only one user rule. The form of this tuple is:

### {"Call", dest-agent, source-agent, id, call-info, user-rule}

where "Call" is the name of the tuple, dest-agent is the destination agent that is expected to receive this tuple, the source-agent field identifies the source agent that sends this tuple, the id field is user identification, and the call-info field contains basic information of both the caller and the receiver such as phone number, name and relationship information between them. The user-rule matches user rule(s) assigned by the agents. The "Call" field and the dest-agent field are used when agents register an event in the TSpaces server 23. The following is a part of the SM agent event registration routine to the TSpaces server 23:

Tuple template=new Tuple("Call", "SMAgent", new Field(String.class), id, new Field(String.class), new Field(String.class), new Field(String.class));

### seqNum=ts.eventRegister(TupleSpace. WRITE, template, this, newThread);

It requests the TSpaces server 23 to notify the SM agent when a tuple is posted where the first field is "Call", the second is "SMAgent", and the fourth is user id, and where the third field is 'new Field(String.class)' which means that any value will be acceptable for this field.

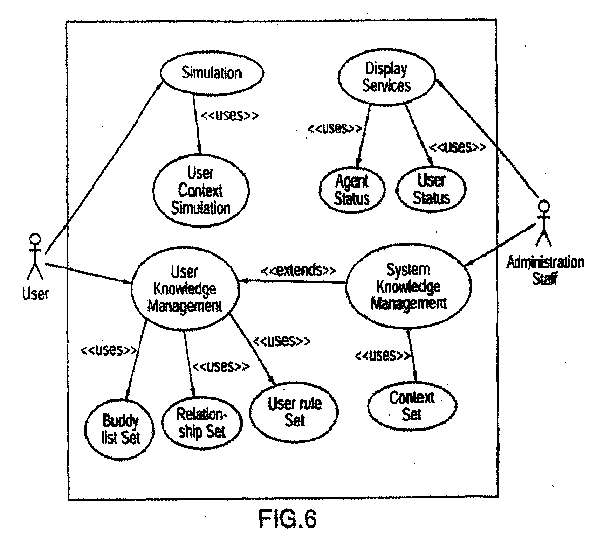

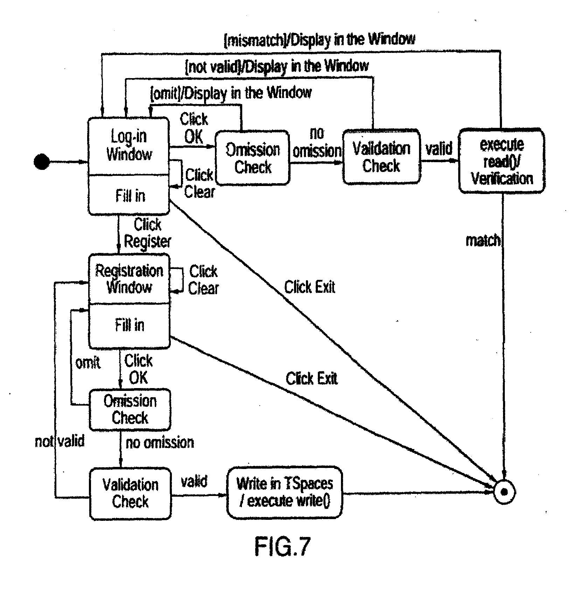

Module interactions show the behaviour of the classes, the modules, and the system as a whole. They describe how the components of the system interact by message passing, function calls, and by sharing the state information. The components interaction for the present invention are shown in the use case diagram and a state chart diagram of FIGS. 6 and 7, respectively, using Unified Modeling Language (UML) notation.

In order to use the system, including the server system for administrators and the client system for users, a person must be authorized. First time users register by clicking the "Register" button in the "Log-in Window", as indicated in FIG. 7. Registering users provides crucial information for using the system such as user-ID, password, name and phone numbers. Every field is filled in without omission before clicking the "OK" button for submitting. Once it is submitted, the system checks validation, such as whether each field has the correct length and is meaningful. In some embodiments, the user-ID is less than 10 alphabetic characters and the password is less than 10 numbers and/or letters. In other embodiments, the name field is less than 20 characters and phone number fields allow only numbers. If the "Validation Check" stage in FIG. 7 is successful, the system writes information to the TSpaces 37 by executing the "write( )" operation. The user registration processes are finished when the system successfully writes the user's information into the TSpaces.

Registered users and administrators need to be authenticated before using the system. The fields for user ID and password in the "Log-in Window" have to be correctly filled in, and then the "OK" button clicked. If both fields are filled without omission, the system checks validation of each field. This validation procedure is the same as it for the user registration. The validated user-ID and password pair should be matched with those in the Tspaces 37. The system obtains the information by executing the "read( )" operation and comparing them. The login processes are finished when either the user clicks the "Exit" button or there is a match between the input user ID and password pair and the pair already in the Tspaces 37.

A prototype of the ACD system of the present invention has been implemented using the Java programming language on a Windows NT platform, with the following packages used for the implementation:
● The Java 2 Platform, Standard Edition v1.3.1, for a Java development environment.
● The TSpaces v2.1.2 as a data repository and a communication medium between agents.
● Mitel Telephony Application Interface (MiTAI) for the PBX interface.

The details of the system's installation and execution method include unpacking the Java class files and executing them, as well as other server initiation processes which would be well known to a person of skill in the art.

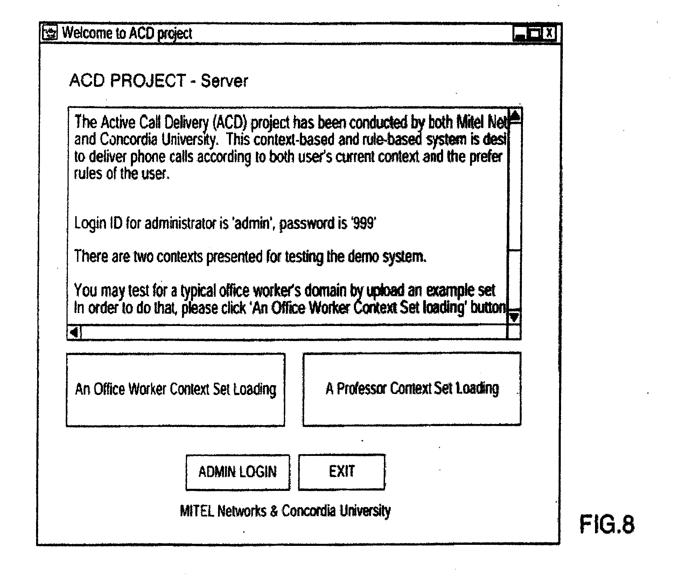

The design of the ACD system is not restricted to any specific domain of users. A flexible method of defining knowledge for a user domain allows the system to be used in different domains. A system administrator can define a hierarchy of the user's location, activity and time according to a domain of target users. For the purposes of the successful prototype of this invention, the system provides two example domains: an office worker's domain and a professor's domain. A user may choose one of the two domains by clicking the corresponding button in the introduction window, as shown in FIG. 8. It sets up the necessary knowledge such as the hierarchy of possible locations, the relationship information and the buddy-list automatically.

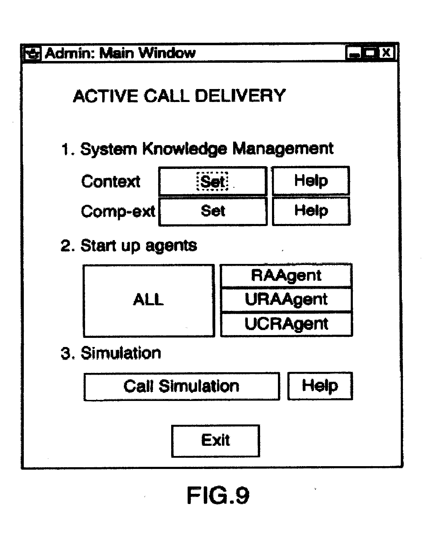

The ACD server system 27 is designed to be simple and easy to use. Having connected to the TSpaces Server 23, the installation procedure for the ACD server system 27 requires unpacking the Java class files and executing them on any machine on the network. At the start, a welcoming window provides brief information about the ACD system, administrator login information, and two buttons to load information for testing purposes: "An Office Worker Context Set Loading", and "A Professor Context Set Loading", as shown in FIG. 8. When "An Office Worker Context Set Loading" button is clicked, example contexts for an office worker are written into the Tspaces 37. This model of the hierarchy of location and activity is shown in FIG. 9. For testing an example of the professor's domain, "A Professor Context Set Loading" can be selected. A tester can start the server without selecting a pre-defined set of information for testing a customized context. The server system informs the tester that a hierarchy of context should be either selected from the two choices or set manually when a tester skips information loading. "ADMIN LOGIN" and "EXIT" buttons are self-explanatory.

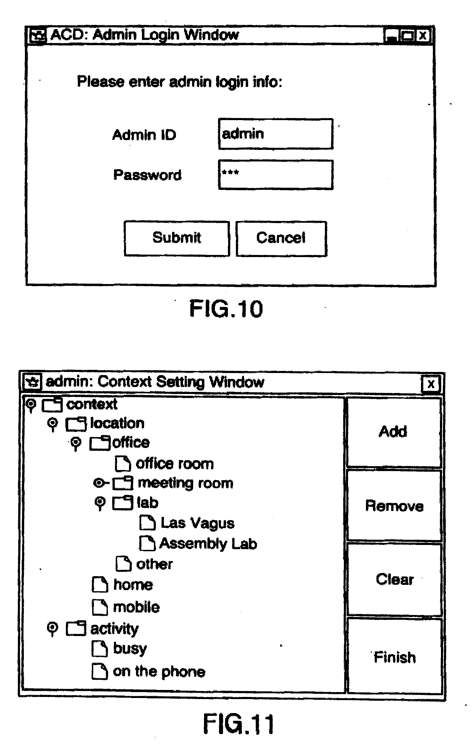

To login as an administrator, who controls knowledge and services for the server, the user is authenticated through the login window for an administrator as shown in FIG. 10. An error message window is presented if a field is omitted or there is a mismatch between Admin ID and Password.

Once the login is authorized, the Server Main Window is presented for further processing, as shown in FIG. 9. In establishing System Knowledge Management (FIG. 3), context setting must first be performed to construct a context hierarchy before a client system provides user services. Clicking the "Set" button of a "Context" (FIG. 9) allows the administrator to set a hierarchy of contexts using the GUI. In some embodiments, the predefined roots of the context hierarchy for this system are location and activity. Time is another context used in this system, but it may be personalized based on a particular user's schedule or a particular company's schedule (e.g. company defined lunch hours and/or coffee breaks and/or business hours). Therefore, each client system manages it's own time context. The context window, with an example location hierarchy and activity, is shown in FIG. 11. To add a new sub-context, the administrator clicks one of contexts in the hierarchy and clicks the "Add" button. A new "child" context is thereby added with the default name "New Node n". Clicking twice on the name renames the context. To remove a node, the administrator clicks the node to be removed and clicks the "Remove" button. Clicking the "Clear" button clears all the nodes from the context tree. To save changes and finish modifying, the administrator clicks "Finish".

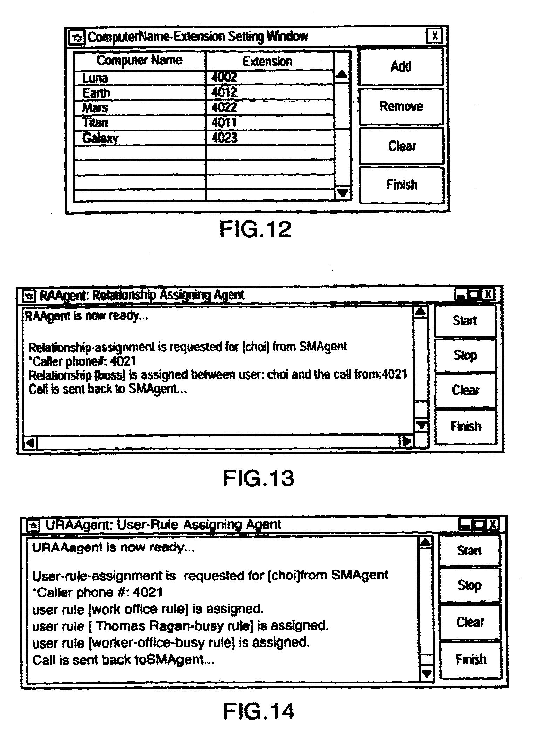

Returning to FIG. 9, a computer name and a phone number are paired and saved in order to forward an incoming call. In ACD system 27, this information is used when the delivery action of matching user preference rule is "Forward it to where I am" or when the user wants to forward an incoming call to a different phone. An administrator can add, remove and change the information by clicking the "Set" button for "Comp-ext", which results in display of the table shown in FIG. 12.

The server agents can be executed on any machine that has access to the TSpaces server 23. This means that any machine within the network can be used to execute a server agent. This design gives a flexible distribution of agents. All the agents can be executed together on a given machine by clicking the "ALL" button (FIG. 9), or each agent can be executed separately either on the same machine or on different machines within the network by clicking the corresponding button. In some embodiments, due to network constraints, each agent may report its status regularly by writing its status tuple once per second, where the lifetime of the tuple is three seconds. The details of status management for the server agents are set forth in detail above with reference to FIGS. 4 and 5. In some embodiments, each agent has a display window and four buttons to control it, as shown in FIG. 13, 14 and 15. Clicking the "Start" button starts a corresponding agent by activate its status report. The "Stop" button is for deactivating its status report for testing purpose. In these embodiments, a maximum of three seconds later, the status tuple for corresponding agent no longer exists in the Tspaces 37 with the result that the clients recognize that the agent is not available. The "Start" and "Stop" buttons are exclusive, in that one is disabled when the other is executing. The "Clear" button clears the display area, and the "Finish" button terminates the corresponding agent.

The Relationship Assigning (RA) agent assigns relationship information between the caller and the receiver based on the user's buddy-list. An example of execution is shown in FIG. 13, wherein a relationship-assigning request from a System Management (SM) agent for a user, who has a user ID "choi", is received. This request comes with the caller's phone number, which is "4021" in this example. The RA agent gets the user's buddy-list from the TSpaces 37 and finds a relationship between the user "choi" and a person who has the phone number "4021 ". As a result, a "boss" relationship is found. The call control is sent back to the client by writing a tuple with relationship information into the Tspaces 37. This agent may return multiple relationships. For example, a person may be both a friend and a customer. Tuples for both of these relationships will therefore be returned.

The User Rule Assigning (URA) agent assigns all user preference rules that match the conditions of the rules and the user's current context, as shown in FIG. 14. If the condition of a rule is made of information that has a hierarchy, sub-categories are examined. For example, a location condition of a user preference rule is 'If I am in the office' . Sub-locations of the office such as lab, meeting room also satisfy the rule's condition. For example, consider the user "choi" receiving a call from extension number "4021" while he is in the meeting room and he is busy. In the testing scenario, "4021" is Thomas Ragan's phone and he is the user's boss. The matching user preference rules based on his current context, relationship information and the caller are as follows:
Rule Name: Worker-Office Rule
Condition: If a call is coming from [worker] relationship
   And when I am in my [office]
Action: Put through the call
Rule Name: Thomas Ragan-Busy Rule
Condition: If a call is coming from [Thomas Ragan]
   And if I am [busy]
Action: Ask the caller what to do
Rule Name: Worker-Office-Busy Rule
Condition: if a call is coming from [worker] relationship
   When I am in my [office]
   If I'm [busy]
Action: Forward it to voice mailbox

The names of the assigning rules are displayed as they are matched in FIG. 14. Although these rules are satisfactory for the user's current context, the system needs to select one rule that is most appropriate for the user in order to take an action.

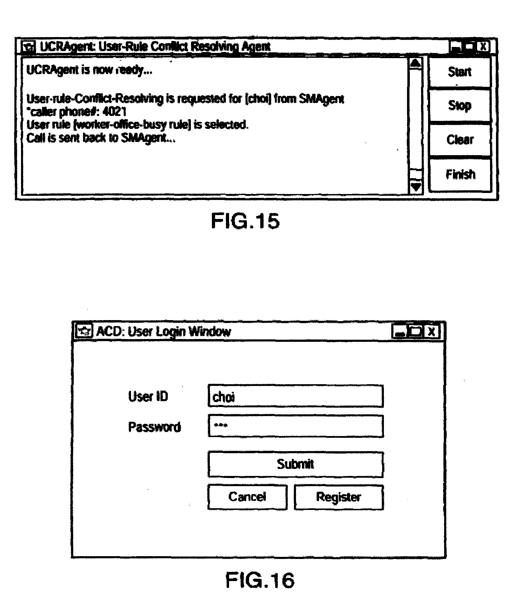

The User-rule Conflict Resolving (UCR) agent selects one user preference rule if there is more than one rule assigned by the URA agent. According to a non-limiting embodiment, the UCR selects the most specific among the assigned rules. A rule with more conditions is considered more specific. In the scenario set forth above, the "worker-office-busy rule" is the most specific rule among the assigned rules, and is therefore selected as shown in the FIG. 15. However, if a rule has the same number of conditions, the UCR agent looks for a more specific condition by comparing the depth of the condition item in the hierarchy. (e.g. "Meeting Room" is more specific than "Office"). When the UCR agent is unable to select one rule among conflict rules by either method set forth above, the system selects the most recently created rule. Specifically, when the UCR agent generates a list of selected rule(s) to the Call Delivery (CD) agent via Tspaces 37, the CD agent assumes there is only one rule assigned by the UCR agent, so it only uses the first rule, which is the most recently created rule (the user rules are saved in order of creation by the user, and the list given to the CD agent is sorted in descending order). Alternatively, the UCR agent may always simply choose a rule at random, or randomly choose a rule in the event of a tie among most specific rules.

As discussed above with reference to FIG. 8, when the ACD client starts, the user is presented with a welcoming window. A brief explanation of the project and the testing information are explained on the white text area. Two buttons, the "An office worker info loading" button and the "A professor info loading" button, are used for testing each domain of users. All the necessary personal information for testing the client (user ID, password, user name, phone numbers, hierarchy of personal relationships, the buddy-list table, the time schedule, and user preference rules) are copied into the TSpaces 37 upon clicking the appropriate button. A confirmation window shows feedback of the result of the processing.

During the login process (FIG. 16), the user's ID and password are checked with the information on the TSpaces server 23. If the user is a new system user, registration is effected through the "Register" option. Clicking the "Register" button in the registration window performs validation and verification for each input field. Once a user is logged-in, either through the login window or the registration window, the user name appears on every client window frame as feedback of the user's identification.

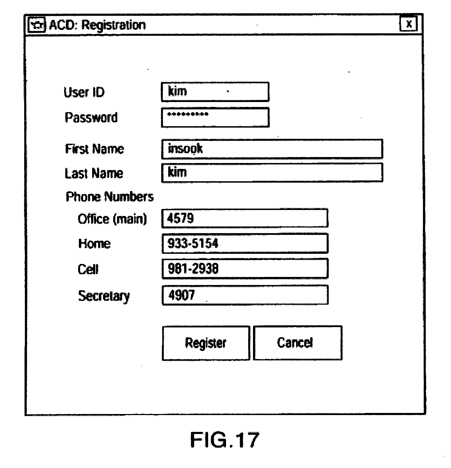

A first-time user is prompted to provide basic user information such as user ID, password, name and phone numbers through registration. The input user ID is checked to see if it is not duplicated with existing user IDs. Each field has its own constraints of length and format. An error window notifies the user if any constraint is violated on clicking the "Register" button (FIG. 17).

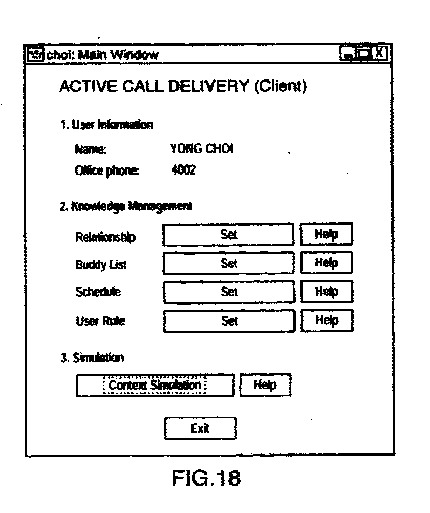

The main window for client control is presented if the login or registration process is successful, as shown in FIG. 18. It consists of three parts: User Information, Knowledge Management, and Context Simulation. The basic user information (the user name and the office phone number) is displayed as feedback to the user. The user ID is displayed in the frame of the window. The user can set his personal information such as relationship information, the buddy list, the schedule and the user preference rule through this menu. In some non-limiting embodiments, each menu has a help button to give a brief explanation of the corresponding item's function.

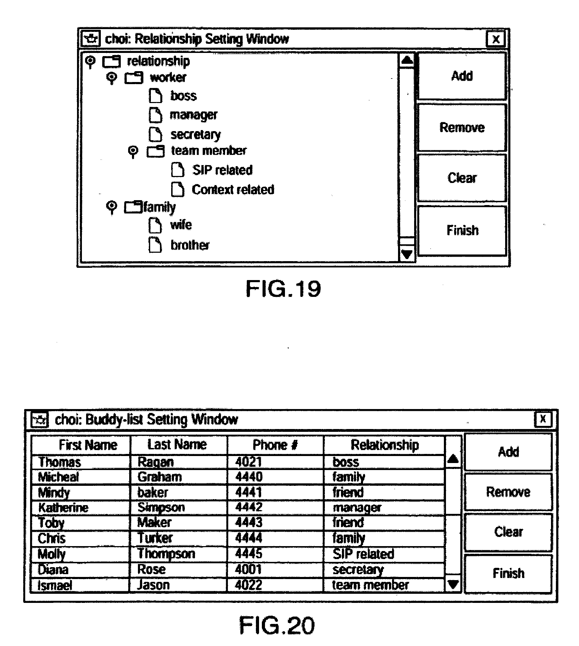

The personal relationship information is shown as a tree structure that is easy to maintain (FIG. 19). To add a new sub-relationship, the user selects one of the relationship nodes and clicks the "Add" button. A new child node is thereby created with a default name, "New Node n", which may be renamed by clicking twice on the name. To remove a relationship, the user selects the removing relationship nodes and clicks the "Remove" button. It should be noted that the sub-relationships that belong to removing relationship are also removed. To remove all of the relationships, the user clicks the "Clear" button to clear all the relationship nodes from the tree. To save changes and finish modifying, the user clicks "Finish".

Clicking any of the fields on the buddy-list table in FIG. 20 allows the user to make changes to that particular field. To remove a set of buddy information from the table, the user selects a column and clicks "Remove". The modified table is saved into the TSpaces 37 when the "Finish" button is clicked.

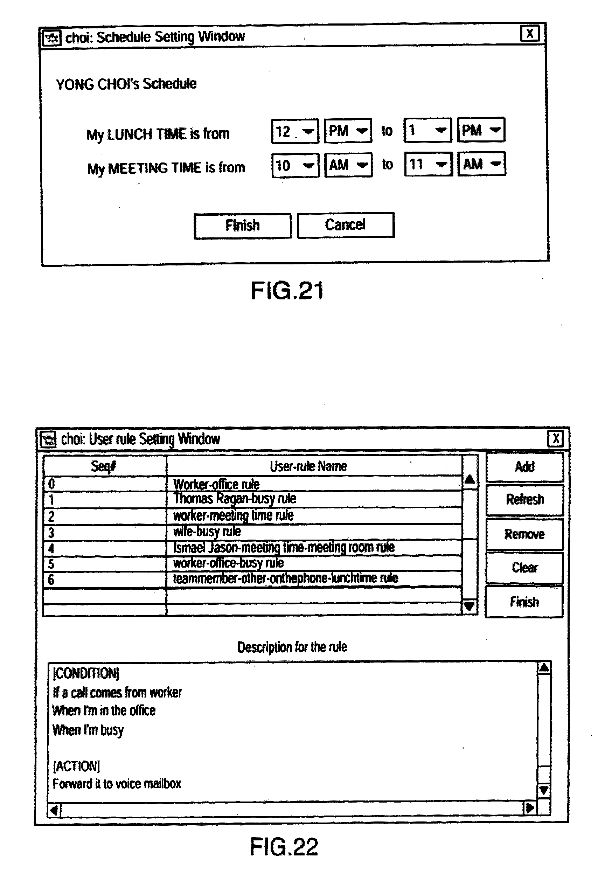

As shown in FIG. 21, in some non-limiting embodiments, a user can set two categorized schedules: lunch time and meeting time. When a user creates a new preference rule, these time settings can be referenced as "lunch time" and "meeting time". The user selects the start time and the end time for each schedule from the pull-down menu in FIG. 21. The "Finish" button saves the schedules and removes the Schedule Setting Window. Though the schedule setting window of FIG. 21 is depicted with only two categorized schedules, the number of categorized schedules is not particularly limiting. Furthermore, in some non-limiting embodiments, the user's schedule may be ascertained from another application (e.g. Microsoft Outlook, etc.) via a schedule agent (not depicted).

The user-rule Setting Window consists of three parts: the user rule table, which consists of sequence numbers and user rule names, UI buttons, and a Description window, as shown in FIG. 22. Clicking on one of the rules in the table allows the user to see the description of the selected rule in the Description window. The add, refresh, remove, clear and finish buttons are used for managing rules. The "Add" button is designed for creating a new rule and it takes four steps, which are explained in detail below. By clicking the "Refresh" button newly created rules are shown in the user rule table. To remove an existing rule, the user selects a deleting rule on the table and clicks the "Remove" button. To remove all the existing rules, the user clicks the "Clear" button. To finishing editing, the user clicks the "Finish" button to save any changes.

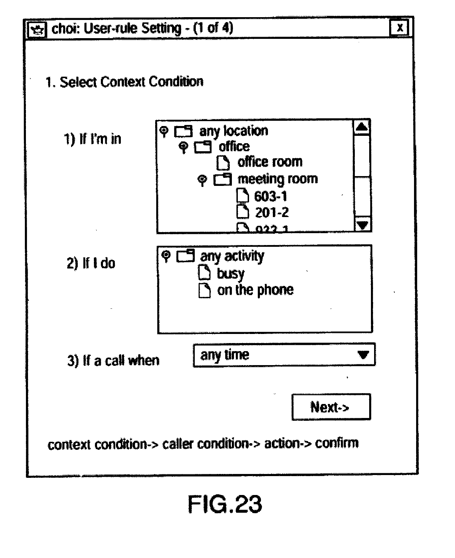

Clicking the "Add" button in the "User-rule Setting Window" starts the creation of a new rule. Adding a new user rule involves four steps. The first step is to select the contexts as a part of the conditions of the rule being created (FIG. 23). The location and activity selection are made from a given hierarchy tree. These hierarchies of location and activity are defined by the administrator from a server. The time context is selected from a pull-down menu with three choices: "any time", "meeting time" and "lunch time". The actual time schedules are set by the user through the "Schedule Setting Window." The steps are displayed at the bottom of the window and the current step is written in red. When the context conditions have been selected, the user clicks the "Next" button to move to the second step.

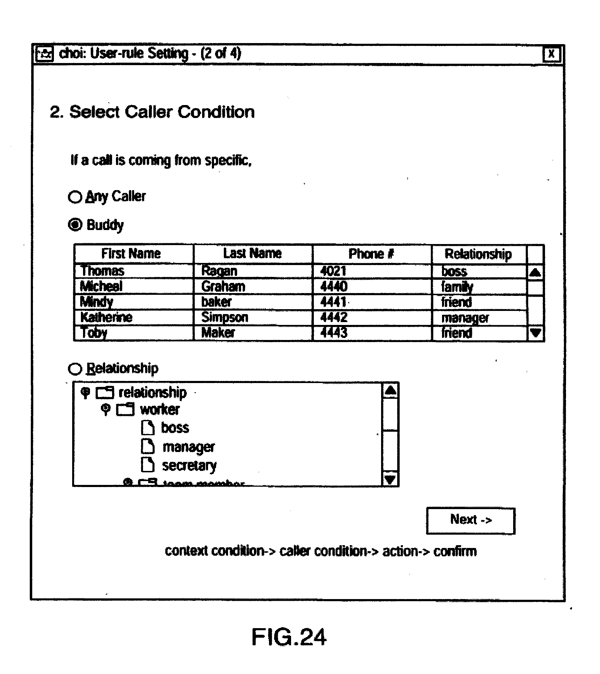

The second step is selecting a type of caller as a part of the condition. One of three categories can be selected: any caller, a buddy list table, and a relationship tree. These three categories are exclusive, so that radio buttons are provided to select only one category. When a category is selected, the user can then select items in its selection window. FIG. 24 shows a non-limiting example of the selection of "Buddy": one of the buddies can now be selected from the buddy table, whereas the relationship hierarchy window remains disabled.

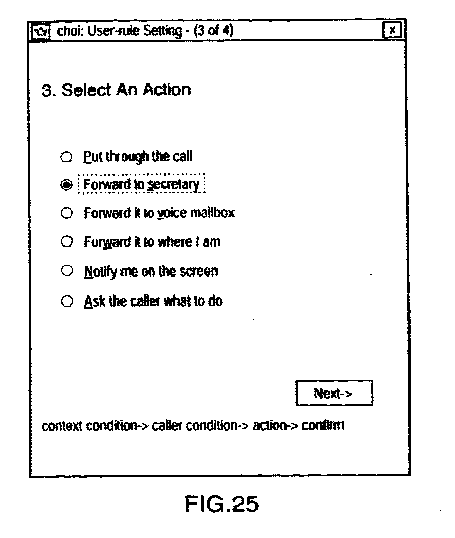

The third step is selecting an action of the rule from the predefined list of actions, as shown in FIG. 25. The action items are listed with their associated radio buttons, and only one can be selected from the list.

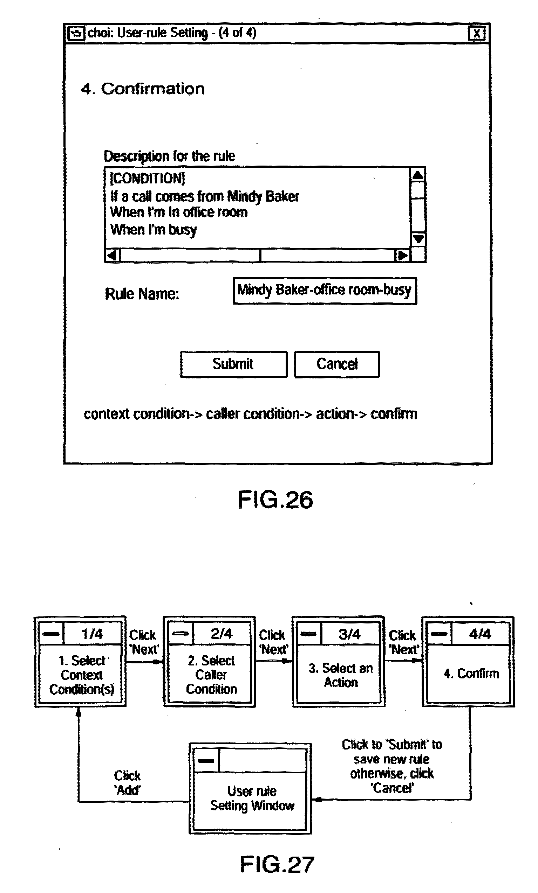

The fourth and the last step for creating a new rule is confirmation. As shown in FIG. 26, the user confirms and assigns a unique rule name. The "Description for the rule" window shows the selections the user made: the condition(s) and an action. Clicking 'Submit' saves the new rule.

The description of the rule as an example for creating a new rule (from FIGS. 23 to 26) is as follows:
Rule Name: Mindy Baker-Office Room-Busy Rule
Condition: If a call is coming from [Mindy Baker]
   And when I'm in my [office room]
   And when I'm [busy]
Action: Forward it to assistant

The entire process to create a user preference rule is shown in FIG. 27.

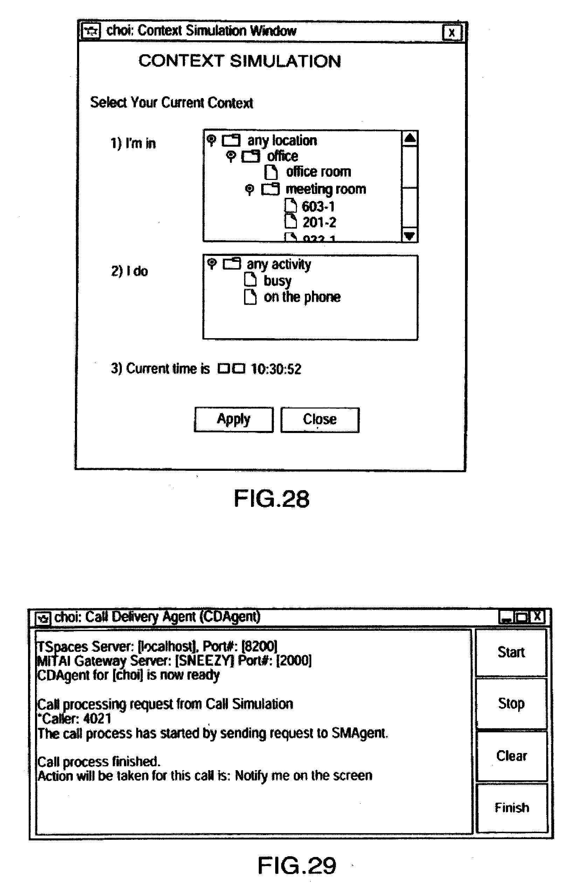

Ultimately, the user's current contexts such as the current location and activity are updated by the Context Agent. In a successful prototype, a simulation program was used to substitute the occurrence of events in real-life. For testing purposes, the tester selects one of the desired contexts on the hierarchy trees, and then clicks the "Apply" (FIG. 28). The current time, which is displayed on the window, is the client machine's system time that is used as time context by matching with a user's schedule.

As discussed above, the client has two agents: the Call Delivery Agent (CD) agent and the System Management Agent (SM) agent. Each agent has its own display window to present procedural messages to a user. The CD agent is connected to both the TSpaces server 23 to communicate with other agents and to the MiTAI Gateway server 25 to communicate with the phone system.

The window in FIG. 29 displays the machine name and the port number of the TSpaces server 23, which this client is connected to. The default TSpaces server name is "localhost", which is the same machine as the current client machine. The second line shows the MiTAI Gateway server name and its port number. The "CDAgent for [choi] is now ready" means that the two necessary connections are confirmed, and the CD agent is ready for the user, whose user ID is "choi".

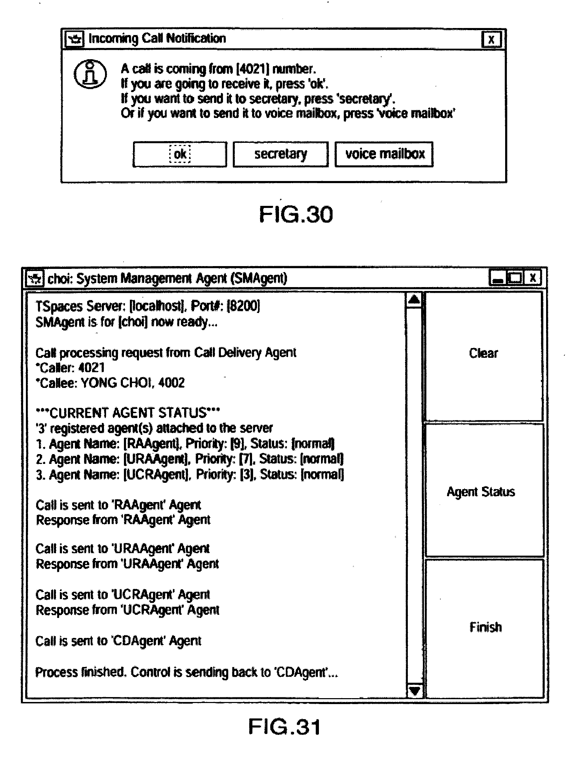

A call processing request can be received from either the Call Simulation or the Call Monitor. The Call Monitor communicates with the MiTAI Gateway server 25 for handling actual phone calls whereas the Call Simulation is another window on a server machine to test the system without MiTAI Gateway interfaces. When call processing has finished involving all the available agents, the CD agent extracts the selected user rule, which is a result of the processing, and requests the Call Monitor to carry out the action stated in the selected rule. When the example in FIG. 29 is executed, the action, "Notify me on the screen", results in a notification window on the client machine, as shown in FIG. 30.

The SM agent is also connected to the TSpaces server 23 to communicate with other agents. The display in FIG. 31 confirms the established connection. The default TSpaces server name is "localhost", which is the same as the CD agent's default server name. "SMAgent is for [choi] now ready" means that the necessary connection is confirmed and the SM agent is ready for the user, whose user ID is "choi". The SM agent is responsible for sequencing the available agents according to their priority. The display window shows the sequencing of the agents as a part of the call processing. When the CD agent notifies the user about an incoming call, the SM agent retrieves the status of the agents and distributes a call control to the each agent. On the completion of the call processing, the control is sent back to the CD agent to execute the selected action. The SM agent window has an "Agent Status" button that allows the user to check the agent status manually. The "Clear" button clears the message display area and the "Finish" button exits the system.

In summary, according to the present invention a model of contexts is defined for a message delivery system and a system architecture provided that facilitates the creation of context- and rule-based communication. Location context is used to forward incoming calls based on location information. The user's activity or availability is used in the instant invention to notify other connected users about the user's status such as "busy", "be back", "away" and "lunch". The time context is used to set the time of application of certain user-defined rules.

By receiving the appropriate messages in the right situation, system users benefit from minimal interruptions. By exploiting personal traits and filtering messages based on both a user's current context models and his/her preference rules, the possibility of having desirable delivery action for the user is enhanced. Although the user's current contexts have been simulated for the purpose of the working prototype of the system set forth in detail above, a person of skill in the art will readily appreciate that the system can be implemented with a Context Agent, which actually detects a user's contexts. To that end, a simple type of the Context Agent, which detects a computer's mouse movement, has been tested. In operation, a user who uses multiple machines in the network first logs into a particular computer. The Context Agent detects the computer's mouse movement and in response updates the user's location information in the Tspaces 37 so that an incoming call can be notified or forwarded to the user at that location.

As discussed in Applicant's co-pending application, "Privacy and Security Mechanism for Presence Systems with Tuple Spaces", U.S. Ser. No. 10/638,416, filed on August 12, 2003 and incorporated herein by reference, although using the TSpaces 37 provides great flexibility in the aspect of multiple agent system design, it suffers from a weakness in security since it allows for the sharing of all information. Some of the privacy-sensitive information such as the user profile should be protected. The TSpaces server 23 provides access control by setting user and group permissions on the Tspaces 37 so that only users with the proper access control permissions may read and write tuples from the TSpaces. Additional security measures are set forth in the aforenoted copending application.

Also, although the successful prototype has been described in terms of call processing, it is contemplated that the principles of the invention may be extended to implement context-based event handling beyond telephony, such as email processing, visitor notification services, etc.

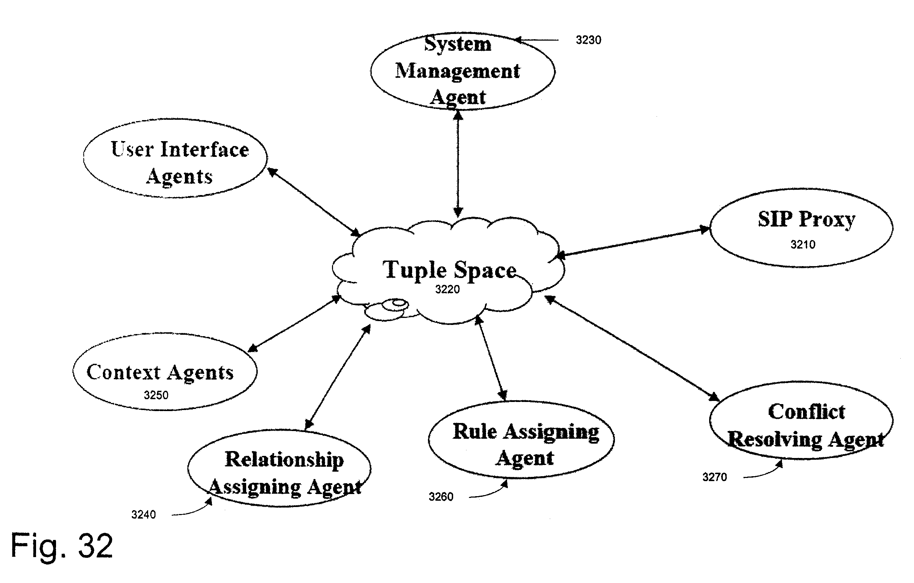

Turning now to embodiments where context aware announcements may be provided, Figure 32 which depicts a block diagram of an agent based view of an embodiment of the system of Figure 2 and 3. However, in the embodiment depicted in Figure 32, a SIP proxy 3210 has replaced the PBX 26 of Figure 2. Indeed, the communication system and communication network is not particularly limiting, and any suitable communication system and communication network may be used in present embodiments.

The SIP proxy 3210 (or alternatively the PBX 26 of Figure 2) receives an incoming call. Using a common gateway interface (CGI) or another suitable service, the SIP proxy 3210 will place assertions about the call within a tuple space 3220, similar to the tuple space 23 and the tuple space 37 described above. In case of a traditional PBX, this may be limited to calling line ID (CLID) and dialled number (e.g. from a DNIS - dialled number information service) information. However using SIP, or a similar suitable protocol, more information such as call subject, urgency etc., may be supplied. The result of this action is that the tuple space 3220 will now contain a number of assertions that describe the call.

A System Management Agent (SMA) 3230 synchronises the behaviour of other agents (described below) surrounding the tuple space 3220 in regard to the handling of a call. The SMA 3230 will trigger these agents at the appropriate time to evaluate the information currently in the tuple space 3220 and to make further assertions that collectively describe the call. Specifically a relationship assigning agent 3240 and a one or more context agents 3250 will be triggered to evaluate the current assertions and relate the incoming call to a current user context.

User context is understood to mean where a user is, what he/she is doing, who he/she is with and what can be deduced from this information. The "what" and the "who" of this may go beyond raw information. The context agents 3250 will contain IF-Then rules or policies that can relate more concrete facts to more abstract concepts. Thus if a location aware context agent determines that the user is in a specific room (say 603-1), another context agent rule may identify room 603-1 as a meeting room and make an assertion about the user being within a meeting room.

Similarly the relationship assigning agent 3240 has a plurality of rules that take evidence about the call and relate the caller with the user. For example, rules may relate a calling number as being associated with a specific individual (e.g. the number 683-1556 is the telephone number of Amanda Slack). In turn, other rules can relate the relationship between the user and the specific individual (e.g. Amanda Slack is the user's boss).

Thus the interoperation of the context agents 3250 and the relationship assigning agent 3240 can take some of the cursory information available with an incoming call and fit the call into the current user's context. So a call from 683-1556 which intrinsically provides only limited guidance to handle it is transformed into a call from the user Debbie's boss while Debbie is in a meeting room. Other information may also be supplied and manipulated by rules, such as who the user is with, the subject of the call, the documents that the user is currently wording on, and the like. Together, these supplied and derived assertions fit the call into the user's current business and/or social context.

This fitting provides a basis whereby other rules may decide how to handle calls. Figure 23 provides an example of this type of rule fitting. In this example, the context is described by
where the user is, what he/she is doing and the current time. This is extended by figure 24 in which the relationship between the caller and the user is defined. Note that in Figure 24, there is subsumption in the relationship category so that Boss is subsumed by the category worker etc. And finally the action required for a call in the specific context described by the previous two interfaces is selected, as in Figure 25.

Furthermore, Figure 32 shows at least one Rule Assigning Agent 3260 and at least one Conflict Resolving agent 3270 that cooperate to select the most appropriate of one or more rules that can be enabled for a call in a specific context, as described above.

If a call in the context of the rule and context set up by the GUIs of figures 23, 24 and 25 is found then the action selected by the radio buttons of figure 30 is performed, as described above.

Alternatively, availability of the user may be decided via call control policies as described in Applicant's co-pending application "Generation of Availability Indicators from Call Control Policies for Presence Enabled Telephony System", U.S. Ser. No. 10/631,747, filed on August 1, 2003 and incorporated herein by reference:
a) Rules can be created by the user that incorporate contextual features to describe availability and in response generate indicators of fuzzy availability. Along with the rules that determine call handling suggestions, these rules are executed in a User Rule Assigning Agent (URA), not depicted.
b) The rules in the URA that decide specific handling of calls are extended to give an indication of the availability that the decisions indicate. Thus, rules that direct the call to the user will show "available", away from the user will show "unavailable" and rules which ask the user will show "no decision".
c) The Conflict Resolving agent 3270 is modified to generate crisp indicators of availability from the generated indicators of fuzzy availability in conjunction with specific decisions on call handling. The CR agent accepts the decisions of the specific call handling rules as definitive. In any case in which these rules cannot make a decision, the CR agent composes the fuzzy indicators to produce a crisp indicator.

In any event, context aware rules are set up which will decide on the handling of calls based on a context associated with the call, for example via the current context of the user and the call information.

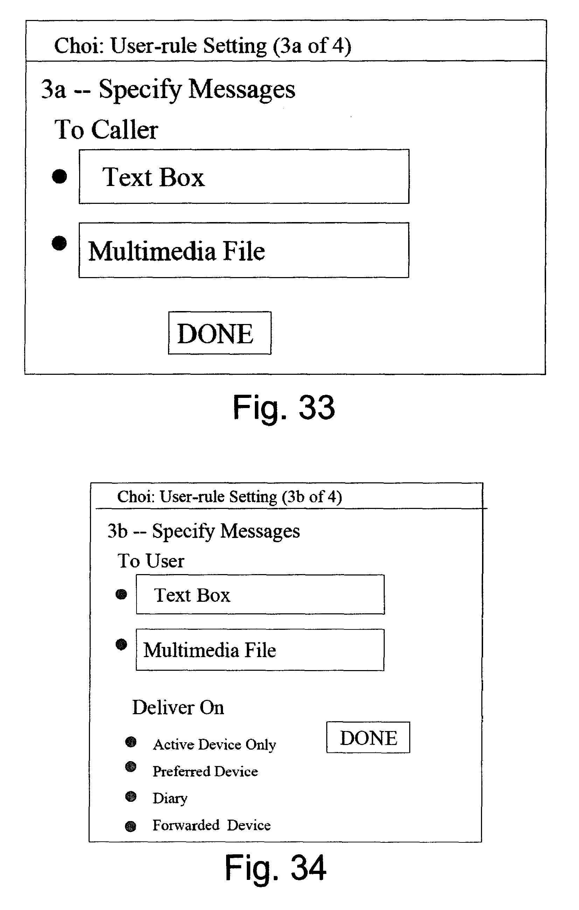

Returning now to Figure 25, in some embodiments, choices on how to handle a call given a current context are presented to the user. Among these choices are a) "Notify me on the screen" and b) "Ask the caller what to do. In embodiments currently under discussion, the result of choice a) can be seen in Figure 33. This is a choice box which will be presented to the user to allow his/her further selection of various ways of handling the call. Although it is shown here as a textual screen presentation, it is widely known in the art to provide such selections through a voice interface. Applicant's co-pending application "Bimodal Feature Access For Web Applications", U.S. Ser. No. 10/375,439, filed on February 27, 2003 presents a non-limiting means by which such selections may be made either from a text or voice interface with a common source being used to derive both interfaces. Figure 33 is a non-limiting representation of such a notification.

In embodiments currently under discussion, choice b) of Figure 25 specifies that an announcement is to be made to the caller of the same sort as choice a) makes to the user. Examples of choices that can be made are 1) go to user voice mail, 2) wait on hold for user, 3) go to user assistant etc.

These announcements are sent so that either the user or the caller may select an action. Furthermore, these announcements may be supplemented by messages (i.e. further announcements) that may be sent to the user, the caller or some other destination specified by the user. These messages can have several purposes. For example a message may be played to a caller to provide details of where he/she is being forwarded and why. Secondly, a message may be played to the user to provide a description of the context in which a call is being forwarded to him/her. If the user has decided to forward the call to a destination other than him/herself such as a colleague or an assistant, a message can be provided to alert the destination user to the purpose of the call. Such a facility is useful for voice mail in that the voice mail can be stored with a message that provides the context of the voice mail. In other embodiments, a message may be sent to a database where it could be used later as a part of a user diary or other application to provide a user with a history of his/her interactions (described in more detail below).

In some non-limiting embodiments, this facility may be provided by the GUIs of figures 33 and 34. While the GUIs of figures 23, 24, 25, and 26 provide a means of setting a rule for action in a particular context. In particular the GUI of Figure 25 allows for the selection of a particular action. In the current embodiment, the selection of a particular action in the GUI of Figure 25 results in at least one additional GUI being presented to the user and/or the caller, for example one or both of the GUIs of figures 33 and 34.

The GUI of figure 33 will follow on directly in the rule programming sequence from the GUI of figure 25. With this, the user can prescribe a message which can be sent to the caller for calls in the prescribed context. The user may optionally chose one or both of a text message or a voice message. Clicking on the Multimedia File box will allow the user to a) record a voice announcement or b) select a multimedia file from the file system (local or network) for presentation as an announcement to the caller. Clicking on the Text box will a) enter a specific text message or b) select a file from the file system (local or network). Either one both or neither of these selections may be selected.

For example a message can be sent of the form:
"Sandy, the Acme matter has become very urgent. I am forwarding you to my colleague Carla whom I have briefed on what is happening with Violet"

Multiple messages for the caller may be entered one at a time until the user selects the Done button on the GUI at which time the sequence will move on to the next steep.

After the messages for the caller have been selected, the sequence may move on to the GUI of figure 34. It is with this GUI that the user may select messages that are intended for the receiving side. As with the previous GUI of Figure 33, the user may select voice and/or textual messages for delivery. However, for this GUI the possibility of different destinations for the message is provided. As indicated in figure 34, these are:
● active device;
● preferred device;
● diary; and
● forwarded device

These different destinations recognize the multiple purposes that messages to the receiving side may serve. Each of these destinations is now described, according to non-limiting embodiments.

The active device is the device on which the user is currently communicating. In these embodiments, a user may be active but want to know when a message has been received from a caller in a specific context. With this knowledge, the user may, for example, adjust his/her priorities so that he/she can attend to the topic in that context. So, for example, messages to the receiving side may be of the forms:
"A call from Doris Leafloor about the Acme project has been sent to voice mail"
   or
"A call from Debbie Pinard has been forwarded to Amanda Slack the departmental assistant"

In each case, the user has been alerted to a potentially important message that will allow him/her to adjust his priorities.

Another alternative is that of the preferred device. For example, the user may be given the option of selecting a device on which he wishes to receive a message, which is not necessarily the active device. Hence, the preferred device would be a device that would allow the user to receive messages at a later time, or in a less intrusive format than his active device. For example this could be an email address, a device that is enabled to receive e-mail and/or text messages, a voice mailbox for later delivery or an instant messaging (IM) address for less intrusive announcements. Messages sent to a user's voice mailbox can be examined at a convenient time so that the user can gain an appreciation of when and for what reasons callers were trying to contact him/her. With use of the IM address, messages may accumulate in a client that the user can attend to when he/she can momentarily divert his/her attention from an urgent task. Thus the user can maintain close attention to an urgent task while at the same time gaining an awareness of other tasks that are requesting priority.

Choosing the diary destination will result in sending messages to a database where they can be accessed later by other applications for other purposes. In some embodiments, the tuple space 3220 of figure 1 may comprise the database, while in other embodiments, a network database may comprise the database. In these embodiments, the network database may be an Exchange server which can retain data for use by other applications. The name "diary" is used in this example since a diary application could extract the messages and present them to the user in a variety of formats. For example, the diary application could present messages indexed by the caller, the time received, the subject of the call etc. With this facility, the user can obtain an appreciation and awareness of the attempts to access him/her and his/her attention. The user can take this information into account when setting his/her priorities.

The forwarded device destination refers to a device to which the selected policy will direct the call. For example, the user may prefer to direct a call to a colleague, an assistant, his/her voice mailbox etc. In such cases, it is desirable that an explanatory message be provided to the destination of the call. In the example of a colleague or an assistant, they will be receiving a call that was intended for someone else, and hence for a purpose that may not be at the top of their mind. The message can hence provide an initial explanation that will allow them to more effectively and efficiently handle the call. For example there may be message of the sort:
"Beverly, this is a message from Eliana, I am forwarding you a call from Aurora about the Acme patent matter. Please remind her of the amended proposal".

In the same way, the user may elect to send the call to voice mail. The announcement will provide a quick indication of the purpose of the call. A textual message could enable a voice mail box to sort announcements by caller, time, subject etc., similar to the diary application described above.

As with the announcements for the caller, multiple announcements may be entered with this window. The process will end with the selection of the DONE button on Figure 34.

The rule assigning agent 3260 and the conflict resolving agent 3270 will cooperate to select the most appropriate of one or more rules that can be enabled for a call in a specific context. These agents will instruct the SIP proxy 3210 via the tuple space 3220 (or the PBX 26 of Figure2 ) as to what function to execute. In a non-limiting example, SIP messages may be delivered by negotiating a session with device indicated during the interaction with the GUI of Figure 33. Subsequently, messages (whether voice, text or multimedia announcement) will be delivered via SIP media negotiations in a means appropriate to each device type. For example, an IM client may receive the text directly, but have the voice media may be presented as an attachment that the recipient can choose to open later. For text messages sent to a telephone, voice mailbox or other voice device, a text to speech converter can be brought into service. The details of each of these delivery methods are well known to persons with knowledge in the art.

Text editors that allow the use of mark up of text are well known, mark up allowing for the provision of features such as choice lists, radio buttons, sliders etc. Use of these features in a text message, in some embodiments, will provide the user with the capability of offering callers, colleagues etc, choices in how to handle the call. Furthermore, servers that transmit marked up HTML pages, for example, may be enabled to receive HTML pages where choices have been indicated by a user, and extract the choices of the user. Hence, the text message can be in the form of an HTML page that can interact with CGI programs, servlets etc. at the supplying server to implement choices. For example, the user may apologize to the caller and offer a list of other colleagues who may be able to take the call.

Use of mark up also provides a mechanism by which variable values may be programmed into the announcements described above. For example, some announcements use the name of the caller, the name of the person the call is transferred to etc. Instead of programming these names individually (which could be tedious or impossible if the policy is based on a class such as colleagues), a variable can be placed into the programmed announcement (textual, verbal etc.). These variables can utilise data that is stored as assertions in the tuple space. For example, in the announcement example used above: "A call from Debbie Pinard has been forwarded to Amanda Slack, the departmental assistant", the announcement could be programmed as "A call from [caller] has been forwarded to [current_secretary], the departmental assistant", with elements within the square brackets interpreted as variables whose values can be obtained from assertions in the tuple space.

In some embodiments, the user may record messages that may be presented to the caller and/or another party on the receiving side. Indeed, in some contexts, presenting messages in the voice of the user may be desirable as it may add to customer value. For example, trust is an essential aspect of business relationships. It is easy to lose that trust if colleagues or customers feel that their concerns are being ignored or slighted. However, there are many instances in which someone in business will have to attend to an emergent problem and temporarily let other matters slide for the moment. This creates the undesirable possibility that colleagues and customers attending to other matters will feel that their concerns have been slighted if their calls are consistently sent to voicemail. Hence, the sound of the user's voce offering an explanation of the current contingency will reassure them that their concerns are still important. By providing them with awareness of the current situation that is forcing a choice in priorities, maintenance of trust is enabled, that is essential in a business context, for example, and the use of the user voice shows a personal interest that enhances trust.

Turning now to embodiments where interactive messages are provided, there are many situations in which the connectivity supplied by wireless communication devices is necessary and useful for important collaborations and yet can produce situations of social awkwardness. Previously described embodiments, allow incoming calls to be placed in a context to see if they are urgent enough to interrupt what the user is doing. However even sufficiently important calls can produce a socially difficult situation. For example, a user may be in a meeting with important visitors and company executives. Answering and taking part in an incoming wireless telephone call can be considered rude and inconsiderate. Users will hence often have their cell phones on vibration alerting mode so that the alerting will not disturb the meeting. However, this solution is of limited utility especially if the result is that the meeting participant puts a cell phone to his/her ear and leaves the meeting room quickly while muttering something into the mouthpiece. This can be very disruptive and can be awkward for all concerned. Hence embodiments that are now described that provide a way to deal with such calls in a silent and discreet manner.

As discussed, selected context-aware announcements (i.e. the messages) can be supplied to the caller. Furthermore, notifications may be supplied to the user along with various options for handling the call, as well as messages. Heretofore, embodiments have been described which provide a single notification and selection. However, in other embodiments, a plurality of notifications may be supplied to the user, with each action associated with an announcement triggering a new notification with a new set of action options. This can be done indefinitely, or until a chosen action results in a final message and a final decision about handling of the call.

For example, the user can select to have his device be alerted to an incoming call, so that the call may be answered. However, in these embodiments, the user may be provided with a notification along with the call which will contain several possible messages associated with actions. These can be configured to give the user the capability of hearing the caller and interacting with him in a manner which is silent and much more discreet than is possible now.

As an example of these embodiments, the user could be presented with a silent alert (vibration) and various options on/his her screen. These options can include various messages associated with various actions. These could include the standard "I am busy now" with the option of sending to voice mail as described above. However, it could also include the option of answering the call and choosing an option which provides a message (for example a prerecorded message) to the caller announcing, "I am in a meeting now, what is the call about". The caller would be expected to briefly state the purpose of the call. In the mean time, the user would be presented either with the same set of announcements and options or with a new set that was selected based on the context and what option the user previously selected. The new set of options could include items such as the expected "Please leave a message in my voice mail", "Please tell me more", "Wait a minute while I leave the room" etc. The duration of these interactions (i.e. the number of rounds of announcements and options) as well as the depth of the possible options presented has no inherent limit and can be of any suitable size.

As indicated previously, two types of systems may be used for the presentation of interactive options. In one case, the same options may be used for all rounds. That is they will remain active until an option is selected that indicates that no further options are needed. Options such as "Send to Voicemail" and "No Further Options Required" are of this sort. The other case allows for the selection of an option to generate the offering a new set of options to supplant the previous. Both of these may be implemented in the same way.

Figure 32 depicts the system of agents that are used to create the context-aware announcements that have previously been described in this disclosure. In operation, the agents communicate and co-ordinate their behaviour by the writing of assertions to the tuple space 3220. The tuple space 3220 will hence be loaded with sets of results that are pertinent to the determination of the user context, the fitting of the incoming call into the user context and the selection of features that can be used to handle these calls. These rules are sensitive to the assertions that are written to the tuple space 3220. The output of these rules can be other assertions that are written to the tuple space 3220. Thus the triggering of one context rule can result in the triggering of the writing of an assertion to the tuple space 3220 which can result in the writing of other assertions that can trigger the writing of a series of assertions that all derive from rule-based reasoning based on the first assertion.

Similar to the context embodiments described above, the user can select an option from the notification derived from the sending of announcement to the caller capability previously described. The interactive options described in this embodiment extend this by allowing the actions possible under these options to be another set of options. These options will provide the set of iterative options that have been described previously.

It is hence seen that the sending of interactive announcements to the caller capability is similar to the functioning of the system in respect to reasoning about context. One rule may trigger another rule. However in the interactive announcement to caller case, the interaction will take place with caller assistance through the medium of announcements.

Turning now to the source of the announcements, these announcements can be sent to the caller in a variety of media as described previously. However for the types of interactions that have been described here, it would be desirable for these announcements to be in the voice of the user. This capability can be provided by providing a registration process for the feature during which the user will be requested to speak the necessary phrases required for the announcements. This is similar to the well-known registration process for voicemail services in which the user is asked to speak various phrases. A set of standard recorded phrases can be provided as default measure in case the user, for whatever reason, does not provide the recordings.

Those skilled in the art will appreciate that in some embodiments, the functionality of the SIP Proxy 3210, the tuple space 3220, the system management agent 3230, the relationship assigning agent 3240, the context agent 3250, the rule assigning agent 3260, and the conflict resolving agent 3270 may be implemented using pre-programmed hardware or firmware elements (e.g., application specific integrated circuits (ASICs), electrically erasable programmable read-only memories (EEPROMs), etc.), or other related components. In other embodiments, the functionality of the SIP Proxy 3210, the tuple space 3220, the system management agent 3230, the relationship assigning agent 3240, the context agent 3250, the rule assigning agent 3260, and the conflict resolving agent 3270 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of providing context aware announcements, comprising,
- applying context call handling rules to determine a current context of an incoming call;
and
- providing at least one context aware announcement for providing information associated said current context and call information.

2. The method of claim 1, wherein said incoming call is from a caller to a user and said providing at least one context aware announcement comprises providing at least one context aware announcement to at least one of said caller, said user and a third party.

3. The method of claim 1, wherein said applying context call handling rules to determine a current context is based on at least one of a relationship between a caller and a user, a schedule of said user, a location of said user, an activity of said user, a call type and a preference of said user.

4. The method of claim 1, wherein said at least one context aware announcement comprises at least one selectable option for handling said incoming call.

5. The method of claim 4, wherein said at least one selectable option comprises requesting information associated with said context of said incoming call.

6. The method of claim 4, further comprising receiving a selection of said at least one selectable option, and providing at least one further selectable option for handling said incoming call.

7. The method of claim 4, further comprising forwarding said incoming call to at least one of voicemail, a database and a third party and wherein said at least one selectable option comprises information associated with said context of said incoming call.

8. The method of claim 1, further comprising retrieving said context call handling rules.

9. The method of claim 1, wherein said context call handling rules are further based on crisp indicators of availability from generated indicators of fuzzy availability in conjunction with specific decisions on call handling.

10. The method of claim 1, wherein said at least one context aware announcement comprises at least one variable value, said at least one variable valuable determined by processing at least one of said current context and said call information.

11. A system for providing context aware announcements, comprising,
- a call management entity for managing incoming calls and the context aware announcements;
- a shared memory space accessible to said call management entity for storing context data; and
- at least one agent coupled to said shared memory space, said at least one agent for:
applying context call handling rules to said context data to determine a current context of an incoming call; and providing at least one context aware announcement to said call management entity for providing information associated said current context and call information.

12. The system of claim 11, further comprising a user interface for enabling interaction of a user with said shared memory space.

13. The system of claim 12, wherein said user interface is enabled to allow a user to set current context within said shared memory space.

14. The system of claim 12, wherein said user interface is enabled to allow a user to respond to context aware announcements originating from said call management entity.

15. A computer readable medium having computer readable code embodied therein for controlling a computer to:
- apply context call handling rules to determine a current context of an incoming call;
and
- provide at least one context aware announcement for providing information associated said current context and call information.
